# EUROPEAN PATENT SPECIFICATION

(11) **EP 2 932 189 B1**
(45) Date of publication and mention of the grant of the patent: **03.06.2020**
(21) Application number: 13799649.2
(22) Date of filing: 29.11.2013
(51) Int. Cl.: G01B 21/04, H04B 1/7156, H04W 52/02

(54) **RADIO INTERFACE FOR COMMUNICATING WITH A PLURALITY OF MEASUREMENT PROBE DEVICES**
FUNKSCHNITTSTELLE ZUR KOMMUNIKATION MIT EINER VIELZAHL VON MESSSONDENVORRICHTUNGEN
INTERFACE RADIO POUR COMMUNIQUER AVEC UNE PLURALITÉ DE DISPOSITIFS À SONDE DE MESURE

(30) Priority: 11.12.2012 GB 201222274
(43) Date of publication of application: 21.10.2015
(73) Proprietor: Renishaw PLC, Wotton-Under-Edge Gloucestershire GL12 8JR (GB)
(72) Inventor: STYLES, John Anthony, Wotton-under-Edge, Gloucestershire GL12 8JR (GB); TAYLOR, Paul Anthony, Wotton-under-Edge, Gloucestershire GL12 8JR (GB)
(74) Representative: Dunn, Paul Edward
(86) International application number: PCT/GB2013/053153
(87) International publication number: WO 2014/091202

(56) References cited:
- EP-A1- 1 933 507
- EP-A1- 2 056 480
- EP-A1- 2 402 714
- WO-A1-2004/057552
- US-A- 5 056 235
- US-A1- 2006 194 564
- US-A1- 2008 304 432

## Description

The present invention relates to a radio interface for measuring apparatus for a machine tool. In particular, the present invention provides an improved frequency hopping radio interface for communication with a plurality of measurement probes.

Co-ordinate positioning apparatus (e.g. machine tools) are often equipped with a measurement device, for example a touch trigger probe, which establishes the geometry of a workpiece or other object during a measurement process by delivering a trigger signal when it comes into contact with a surface. The measurement probe has a stylus which deflects on contact with the surface and produces the trigger signal. This trigger signal is used to freeze the outputs of the measurement scales of the co-ordinate positioning apparatus thereby indicating the position of the probe and thus the surface.

In certain circumstances, for example when it is difficult to wire a probe directly to a machine controller, a wireless transmission system is used to communicate the trigger signal to the machine controller via a probe interface. A frequency hopping spread spectrum communications link between a probe and a paired probe interface is described in WO2004/057552. EP1931936 describes a modification to the arrangement described in WO2004/057552 that allows a plurality of probes to be used, non-concurrently, with a single probe interface. This is achieved by programming each of the plurality of probes with the same probe identity code and ensuring that only one of the plurality of probes is active at any single point in time. This has the disadvantage that it is not possible to turn on a selected probe over the radio link and other turn-on techniques (e.g. shank switches or spin on/off sensors) need to be used.

Wireless measurement probe systems are also described in US5056235 and EP2056480. The use of wireless communications for a plurality of length measurement probes is described in EP2402714. Wireless communication systems are also described, not in the context of measurement probes, in US2008/0304432, EP1933507, US2006/0194564.

According to a first aspect of the present invention, there is provided a radio interface for communicating with a plurality of measurement probe devices as defined in appended claim 1.

The present invention thus comprises a frequency hopping spread spectrum radio interface for communicating with a plurality of measurement probe devices (e.g. a plurality of touch trigger measurement probes). One of the measurement probe devices (i.e. the first measurement probe device) communicates with the primary modem over the first frequency hopping spread spectrum radio link. The first measurement probe device is preferably in its measurement or "operating" mode and is thus arranged to transmit measurement data (e.g. trigger event messages) when required. The first measurement probe device may thus be mounted in the spindle, or on the table, of a machine tool to allow the measurement of workpieces or cutting tools. The first modem is also configured to maintain frequency hopping synchronisation with the first measurement probe device. For example, the first measurement probe device may periodically transmit a message from which clock or timing data can be extracted by the interface.

The radio interface also comprises a secondary or standby modem for communicating with further measurement probe devices over different (e.g. asynchronous) frequency hopping spread spectrum radio links. The secondary modem allows frequency hopping synchronisation to be maintained with multiple further measurement probe devices. The further measurement probe devices are in their "standby" mode in which the measurement circuitry is deactivated to save battery power and periodic messages are transmitted to allow frequency hopping synchronisation to be maintained.

The radio interface of the present invention thus allows communications to be maintained with a first measurement probe device (e.g. an actively operating device that is being used to acquire measurement data) and a plurality of further measurement probe devices (e.g. devices that have been placed in a standby or non-measurement mode but may be required for measurement in the near future). This arrangement is advantageous because, as explained in more detail below, the radio interface maintains frequency hopping synchronisation with the plurality of measurement probe devices that are in their "standby" mode. This allows the interface to switch any one of the further measurement probe devices into their "operating" mode, whereupon that device can become the first measurement probe device and immediately start communicating with the primary modem. This removes the need to establish frequency hopping synchronisation each time a different measurement probe device is used to take a measurement and thus makes more efficient use of the spectrum by reducing the burst of radio traffic that is typically required during initial frequency hopping synchronisation. The invention also allows a selected measurement probe to be placed in its "operating" mode via a radio signal rather than having to use separate (non-radio) "switch on" techniques.

According to the invention, the primary modem is configured to receive time critical measurement data from the first measurement probe device over the first frequency hopping spread spectrum radio link. For example, the first measurement probe device may receive measurement data that relates to the time of a measurement event that has been recorded by the first measurement probe device. In a preferred embodiment, the primary modem is for communicating with a first measurement probe device that comprises a touch trigger measurement probe. The measurement data may then comprise a trigger signal message. The communications protocol described in WO2004/057552 may conveniently be implemented by the interface using the primary modem. For example, the interface may recover a master clock signal from the first measurement probe device over the first frequency hopping spread spectrum link.

Each further measurement probe device preferably has its own master clock. The interface thus preferably maintains a plurality of clock domains that are synchronised with the plurality of further measurement probe devices. Advantageously, the interface recovers a master clock signal from each of the plurality of further measurement probe devices over the further frequency hopping spread spectrum radio links. A suitable technique for clock recovery (e.g. using a sliding correlator) is described in WO2004/057552. The plurality of further frequency hopping spread spectrum radio links between the secondary modem and the plurality of further measurement probe devices may be asynchronous.

The interface conveniently stores the hopping patterns of each of the plurality of further measurement probe devices and/or the first measurement probe device. The hopping patterns may be stored in a memory or lookup table of the interface. The interface may also be arranged to acquire details of each hopping pattern (e.g. from the relevant measurement probe device or from a store of such hopping patterns). Each of the further frequency hopping spread spectrum radio links preferably uses a different hopping pattern. In other words, the sequence in which the frequency channels are used is preferably different for each of the further frequency hopping spread spectrum radio links. The first measurement probe device communicating with the primary modem is preferably not one of the plurality of further measurement probe devices in communication with the secondary modem. The first measurement probe device communicating with the primary modem preferably uses a hopping pattern that is different to that of any of the further measurement probe devices.

According to the invention, each of the plurality of further measurement probe devices in communication with the secondary modem are in a standby mode or state. The standby state preferably involves the measurement probe device periodically transmitting a timing or heartbeat signal. This timing signal is preferably acknowledged by the secondary modem upon receipt. As explained above, the timing signal may also be used by the interface to recover timing information from the measurement probe device (e.g. to recover the master clock of the relevant measurement probe device).

The further frequency hopping spread spectrum communications links are only used to maintain hopping synchronisation and to request a selected one of the further measurement probes switches from the "standby" mode to the "operating" mode. According to the invention, the secondary modem does not allow measurement data to be received from any of the plurality of further measurement probe devices. In other words, the plurality of further frequency hopping spread spectrum radio links are provided to only implement standby communications and not to transfer measurement data. The secondary modem may operate at a lower hopping rate than the primary modem.

The secondary modem may communicate with as many measurement probe devices as necessary. For example, the secondary modem may communicate with at least three or at least four measurement probe devices. The secondary modem preferably comprises one antenna. The primary modem may also comprise one antenna (which is preferably a different antenna to the antenna of the secondary modem).

Advantageously, the radio interface comprises a master controller for controlling the primary and secondary modems. The master controller may schedule timeslots for receipt of signals by the secondary modem from each of the further measurement probe devices. The master controller may conveniently prevent the secondary modem transmitting on a frequency channel during times when the primary modem is transmitting, or expecting to receive, on such a channel. In other words, the master controller may ensure all primary modem communications (which may relay time critical measurement date) take precedence over any secondary modem transmissions.

A mentioned above, the radio interface allows one of the further measurement probe devices that are communicating with the secondary modem to be switched from its "standby" mode into its "operating" mode and thereafter act as the first measurement probe device that communicates with the primary modem. The selection of the first measurement probe device may be controlled by the master controller of the radio interface, optionally on receipt of appropriate instructions from the machine tool controller. The master controller may thus define which measurement probe device is allocated as the first measurement probe device for communication with the primary modem and which measurement probe devices are allocated as further measurement probe devices for communication with the secondary modem. The master controller may also allow the first measurement probe device that has been allocated for communication with the primary modem to be switched to one of the plurality of further measurement probe devices in communication with the secondary modem, whereby frequency hopping synchronisation information previously used by the secondary modem is used by the primary modem to allows communications with the new first measurement probe device to be established. Frequency hopping synchronisation information used by the primary modem may also be used by the secondary modem when a measurement probe device is switched into standby mode and its allocation changed from the first measurement probe device to a further measurement probe device.

It should also be noted that the various parts of the system are described herein as functional blocks but the skilled person would appreciate that they may be implemented in any suitable manner. For example, discrete circuits performing the various functions may be connected together. Preferably, the various functions are formed by suitably programming a field-programmable gate array (FPGA) chip.

The present invention also extends to measurement apparatus that comprises a radio interface as described above and one or more measurement probe devices. Each measurement probe device may comprise a touch trigger measurement probe for a machine tool

The present invention also extends to a measurement kit comprising a radio interface as described above and at least one of a measurement probe device, a tool shank for a measurement probe device, software for interfacing the radio interface with a machine tool controller, a battery and a power supply. According to a further aspect of the invention, a radio interface is provided for communicating with a plurality of measurement probe devices, the interface comprising a standby modem for communicating with a plurality of measurement probe devices using a plurality of frequency hopping spread spectrum radio links. The standby modem may allow frequency hopping synchronisation to be maintained with each of said plurality of measurement probe devices. The standby modem does not allow measurement data to be passed from one or more of the measurement probe devices to the interface. According to the invention, the standby modem does not allow measurement data to be passed from any of the measurement probe devices to the interface.

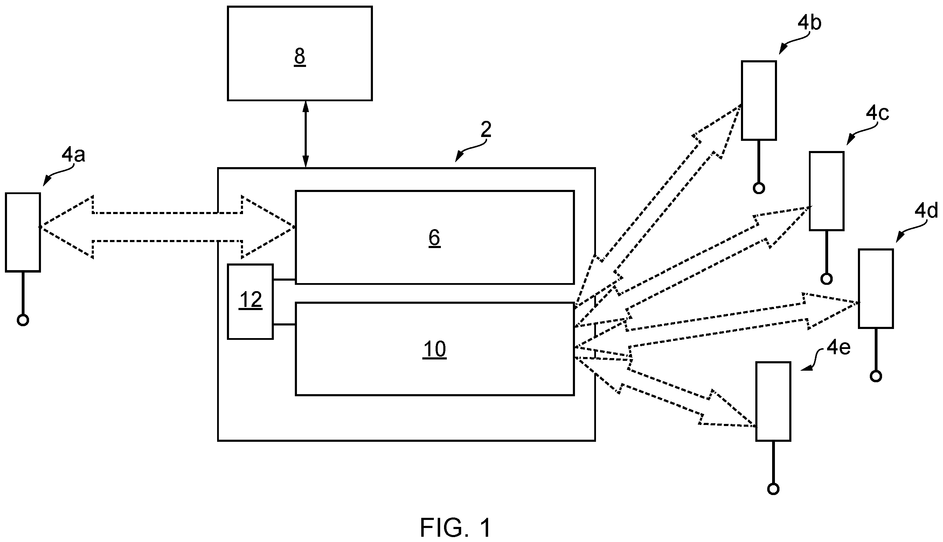

The invention will now be described, with reference to figure 1, by way of example only.

Figure 1 illustrates a frequency hopping radio interface 2 that can be installed on a machine tool (e.g. bolted to a machine tool frame) and used to communicate with a plurality of measurement probes 4a-4e.

In this example, each of the measurement probes 4a-4e is a touch trigger measurement probe having a probe body and a deflectable stylus. In use, deflection of the stylus occurs when contact with an object is made. Each of the measurement probes 4a-4e include a frequency hopping radio communications module as described previously in WO2004/057552. The description of figures 1 to 6 of WO2004/057552 gives full details of the measurement probe communications architecture. As also explained in WO2004/057552, each measurement probe can be placed in an "operating" (i.e. measurement) mode or in a "standby" mode.

In the operating mode, the probe periodically exchanges messages with the interface to maintain the necessary hopping synchronisation. The probe is also configured to perform measurements (e.g. it may be loaded in the spindle of a machine tool) and will transmit a "trigger" message whenever its stylus is deflected. As explained in WO2004/057552, one or more re-transmissions of the trigger message are possible if it is not properly received by the interface.

In standby mode, the measurement probe is not used for measurement (e.g. it is stored in a rack or tool change carousel) and therefore does not transmit any trigger messages. Instead, the measurement probe exchanges regular messages with the interface to maintain frequency hopping synchronisation and to enquire whether it needs to change into its operating mode. The interval between the exchange of regular messages in standby mode may be longer than the interval between the exchange of regular messages in operating mode. For example, in standby mode the interval may be 750ms whereas a shorter interval of 20ms may be used in operating mode.

In prior art systems, the interface is only able to establish a frequency hopping spread spectrum radio link with one probe at a time. In contrast, the radio interface 2 of the present invention allows frequency hopping spread spectrum radio links to be maintained with multiple measurement probes 4a-4e.

Referring again to figure 1, the radio interface 2 comprises a primary modem 6 for establishing a frequency hopping spread spectrum radio link with a first measurement probe 4a that is in its "operating" mode. The primary modem thus receives periodic messages from the first measurement probe 4a and uses those periodic messages to recover the master clock of the first measurement probe 4a and thereby ensure synchronised frequency hopping is maintained. If a "trigger" message is received by the primary modem 6 from the first measurement probe 4a, a trigger signal is issued by the radio interface 2 to the controller 8 of the machine tool. As explained in WO2004/057552, the delay between the trigger event and the issuance of the trigger signal to the controller is preferably invariant to allow the effect of such a delay on position measurements to be removed by appropriate calibration. This delay is preferably sufficiently long to allow one or more retransmissions of the trigger message, if required. It can thus be seen that the primary modem 6 performs similarly to the machine station or interface that is described in WO2004/057552.

In addition to the primary modem 6, the interface 2 also comprises a secondary modem 10 (which could also be termed the "standby modem"). The secondary modem 10 is provided for maintaining frequency hopping communication links with multiple (in this case four) measurement probes 4b-4e that are in their "standby" mode. The secondary modem 10 thus receives the regular messages transmitted by each of the measurement probes 4b-4e. The master clock of each measurement probe 4b-4e is recovered from these regular messages. The interface (using the secondary modem 10) also acquires knowledge of the different hopping patterns of each of the measurement probes 4b-4e in a known manner. The interface thus maintains four separate clock domains for the secondary modem and also stores details (e.g. in a memory) of the four individual hopping patterns of the four measurement probes 4b-4e.

The interface 2 also comprises a master controller 12 that schedules the communications of the primary modem 6 and the secondary modem 10. The master controller 12 ensures that communications between the primary modem 6 and the first measurement probe 4a always take priority. In particular, the master controller 12 ensures that the secondary modem does not transmit any messages in time slots when the primary modem is transmitting or expecting to receive data from the first measurement probe 4a on the same or a similar frequency channel. This helps ensure that the communications between the primary modem 6 and the first measurement probe 4a are not affected by the secondary modem 10. Furthermore, the master controller 12 manages the timing of communications between the secondary modem 10 and the four standby measurement probes 4b-4e.

As mentioned above, the hopping patterns and clock domains of the four standby measurement probes 4b-4e are known by the interface. This enables it to accurately predict at what time and on what channel each individual measurement probe will initiate its communications. Once communications with all the probes has been established, the master controller 12 allocates each standby probe (i.e. measurement probes 4b-4e) a "protected" slot. If a communication from another of the standby measurement probes is received during this protected period, the measurement probe is not acknowledged (forcing it to re-attempt communication on another channel, which will be different to the measurement probe that was expected). This measurement probe will then be picked up once the expected probe has made its own communication.

By way of analogy, this method can be likened to four buses using a single bus stop on a circular road. There is a timetable that indicates at what time and channel each bus should turn up. If two buses turn up at the bus stop together, the one that is expected is dealt with. The other one is sent straight through. During periods of time when a bus isn't expected, if a bus turns up it is dealt with immediately (and a new timetable is generated).

The above approach thus provides for scheduling of asynchronous communications, which is not something that would happens for four separate colocated systems. It also means that once all the standby probes have been communicated with, discrete allocated time slots are used which means that none of the four standby probes can mutually interfere with each other. It is also component efficient (one modem and matching network) and means the secondary modem needs only one antenna. It can thus been seen that the present invention has advantages in terms of communications reliability and cost over co-locating multiple prior art interfaces to separately communicate with multiple measurement probes. Furthermore, it can be assured that the standby communication links of the secondary modem do not interfere with the transmission of the potentially time critical messages between the first measurement probe 4a and the primary modem.

It should also be noted that a main purpose of the present invention is to allow multiple probes to be maintained in standby mode so that they can be used to take measurements with the minimum of delay. The master controller 12 may thus be instructed (e.g. by the machine tool controller 8) that measurements are no longer to be acquired using the probe 4a but that, say, probe 4c is to be used for measurement purposes. In such an example, the probe 4a is instructed to enter standby mode by the primary modem and the required probe 4c is instructed to enter operating mode. The frequency hopping pattern and timing data for the probe 4c is then used by the primary modem to quickly establish a full communications link with the probe 4c, whilst the frequency hopping pattern and timing data for the probe 4a is used by the secondary modem. In this manner, it is possible to quickly switch between measurement probes "in-cycle" using the frequency hopping radio links.

It should again be noted that the above example is merely illustrative of the present invention and variations would be possible. For example, fewer or more than five probes could be used. The measurement probes may also be spindle mountable or table mountable measurement probes. Although the interface 2 is shown as single item, it could have distributed components or external antennas etc. The skilled person would be aware of the many variations that could be implemented as long as they remain within the scope of protection as defined in the appended claims.

## Claims

1. A radio interface (2) for communicating with a plurality of measurement probe devices (4a-4e), the radio interface (2) comprising a primary modem (6) for communicating with a first measurement probe device (4a) over a first frequency hopping spread spectrum radio link, the primary modem (6) being configured to allow frequency hopping synchronisation to be maintained with the first measurement probe device (4a) and to receive time critical measurement data from the first measurement probe device (4a) over the first frequency hopping spread spectrum radio link,
**characterised in that** the interface (2) also comprises a secondary modem (10) configured to communicate with a plurality of further measurement probe devices (4b-4e) when said further measuring probe devices are in a standby state using a plurality of further frequency hopping spread spectrum radio links, the secondary modem (10) being configured to allow frequency hopping synchronisation to be maintained with each of said plurality of further measurement probe devices (4b-4e) but not to allow measurement data to be received from any of the plurality of further measurement probe devices (4b-4e).

2. A radio interface (2) according to any preceding claim, wherein the primary modem (6) is for communicating with a first measurement probe device (4a) that comprises a touch trigger measurement probe and the measurement data comprises a trigger signal message.

3. A radio interface (2) according to any preceding claim, wherein a master clock signal is recovered from the first measurement probe device (4a) over the first frequency hopping spread spectrum radio link.

4. A radio interface (2) according to any preceding claim, wherein the interface is configured to maintain a plurality of clock domains that are synchronised with the plurality of further measurement probe devices (4b-4e).

5. A radio interface (2) according to any preceding claim, wherein a master clock signal is recoverable from each of the plurality of further measurement probe devices (4b-4e) over the plurality of further frequency hopping spread spectrum radio links.

6. A radio interface (2) according to any preceding claim, wherein the interface (2) comprises means for storing the hopping pattern of the first measurement probe device (4a) and each of the plurality of further measurement probe devices (4b-4e) and the first measurement probe device (4a) and each of the plurality of further measurement probe devices (4b-4e) implement different frequency hopping patterns.

7. A radio interface (2) according to any preceding claim, wherein the plurality of further frequency hopping spread spectrum radio links between the secondary modem (10) and the plurality of further measurement probe devices (4b-4e) are asynchronous.

8. A radio interface (2) according to any preceding claim, wherein each of the plurality of further measurement probe devices (4b-4e) is adapted for periodically transmitting a timing signal, the second modem (10) being configured to acknowledge said timing signal on receipt.

9. A radio interface (2) according to any preceding claim, wherein the secondary modem (10) is configured to operate at a lower hopping rate than the primary modem (6).

10. A radio interface (2) according to any preceding claim, comprising a master controller (12) for controlling the primary and secondary modems, wherein the master controller (12) is configured to schedule timeslots for receipt of signals by the secondary modem (10) from each of the further measurement probe devices (4b-4e).

11. A radio interface (2) according to claim 10, wherein the master controller (12) is configured to prevent the secondary modem (10) transmitting on a frequency channel during times when the primary modem (6) is transmitting, or expecting to receive, on such a channel.

12. A radio interface (2) according to any one of claims 10 to 11, wherein the master controller (12) is configured to define which measurement probe device (4a-4e) is allocated as the first measurement probe device (4a) for communication with the primary modem (6) and which measurement probe devices (4b-4e) are allocated as further measurement probe devices for communication with the secondary modem (10).

13. A radio interface according to any one of claims 10 to 12, wherein the master controller (12) is configured to allow the first measurement probe device (4a) that has been allocated for communication with the primary modem (6) to be switched with one of the plurality of further measurement probe devices (4b-4e) in communication with the secondary modem (10), whereby frequency hopping synchronisation information used by the secondary modem (10) is used by the primary modem (6) to allow communications with the new first measurement probe device to be established.

14. Measurement apparatus comprising a radio interface (2) according to any preceding claim and one or more measurement probe devices (4a-4e).

15. Measurement kit comprising a radio interface (2) according to any one of claim 1 to 13 and at least one of a measurement probe device (4a-4e), a tool shank for a measurement probe device, software for interfacing the radio interface with a machine tool controller, a battery and a power supply.

## Patentansprüche

1. Funkschnittstelle (2) zur Kommunikation mit einer Mehrzahl von Messtastervorrichtungen (4a-4e), wobei die Funkschnittstelle (2) ein primäres Modem (6) zur Kommunikation mit einer ersten Messtastervorrichtung (4a) über eine erste Frequenzsprung-Spektrumspreizfunkverbindung umfasst, wobei das primäre Modem (6) derart konfiguriert ist, die Beibehaltung einer Frequenzsprungsynchronisierung mit der ersten Messtastervorrichtung (4A) zu ermöglichen und zeitkritische Messdaten von der ersten Messtastervorrichtung (4a) über die erste Frequenzsprung-Spektrumspreizfunkverbindung zu empfangen,
**dadurch gekennzeichnet, dass** die Schnittstelle (2) auch ein sekundäres Modem (10) umfasst, das derart konfiguriert ist, mit einer Mehrzahl weiterer Messtastervorrichtungen (4b-4e), wenn die weiteren Messtastervorrichtungen in einem Bereitschaftszustand sind, unter Verwendung einer Mehrzahl weiterer Frequenzsprung-Spektrumspreizfunkverbindungen zu kommunizieren, wobei das sekundäre Modem (10) derart konfiguriert ist, die Beibehaltung einer Frequenzsprungsynchronisierung mit jeder der Mehrzahl weiterer Messtastervorrichtungen (4b-4e) zu ermöglichen, jedoch nicht zu ermöglichen, dass Messdaten von einer der Mehrzahl weiterer Messtastervorrichtungen (4b-4e) empfangen werden.

2. Funkschnittstelle (2) nach einem der vorhergehenden Ansprüche, wobei das primäre Modem (6) zur Kommunikation mit einer ersten Messtastervorrichtung (4a) dient, die einen Berührungsauslösemesstaster umfasst und die Messdaten eine Auslösesignalnachricht umfassen.

3. Funkschnittstelle (2) nach einem der vorhergehenden Ansprüche, wobei ein Haupttaktsignal von der ersten Messtastervorrichtung (4a) über die erste Frequenzstrom-Spektrumspreizfunkverbindung rückgewonnen wird.

4. Funkschnittstelle (2) nach einem der vorhergehenden Ansprüche, wobei die Schnittstelle derart konfiguriert ist, eine Mehrzahl von Taktdomänen beizubehalten, die mit der Mehrzahl weiterer Messtastervorrichtungen (4b-4e) synchronisiert sind.

5. Funkschnittstelle (2) nach einem der vorhergehenden Ansprüche, wobei ein Haupttaktsignal von jeder der Mehrzahl weiterer Messtastervorrichtungen (4b-4e) über die Mehrzahl weiterer Frequenzsprung-Spektrumspreizfunkverbindungen rückgewonnen werden kann.

6. Funkschnittstelle (2) nach einem der vorhergehenden Ansprüche, wobei die Schnittstelle (2) ein Mittel zum Speichern des Sprungmusters der ersten Messtastervorrichtung (4a) und jeder der Mehrzahl weiterer Messtastervorrichtungen (4b-4e) umfasst, und die erste Messtastervorrichtung (4a) und jede der Mehrzahl weiterer Messtastervorrichtungen (4b-4e) verschiedene Frequenzsprungmuster implementieren.

7. Funkschnittstelle (2) nach einem der vorhergehenden Ansprüche, wobei die Mehrzahl weiterer Frequenzsprung-Spektrumspreizfunkverbindungen zwischen dem sekundären Modem (10) und der Mehrzahl weiterer Messtastervorrichtungen (4b-4e) asynchron sind.

8. Funkschnittstelle (2) nach einem der vorhergehenden Ansprüche, wobei jede der Mehrzahl weiterer Messtastervorrichtungen (4b-4e) derart angepasst ist, ein Zeitsteuersignal periodisch zu übertragen, wobei das zweite Modem (10) derart konfiguriert ist, das Zeitsteuersignal bei Empfang zu bestätigen.

9. Funkschnittstelle (2) nach einem der vorhergehenden Ansprüche, wobei das sekundäre Modem (10) derart konfiguriert ist, bei einer niedrigeren Sprungrate als das primäre Modem (6) zu arbeiten.

10. Funkschnittstelle (2) nach einem der vorhergehenden Ansprüche, mit einem Hauptcontroller (12) zum Steuern des primären und sekundären Modems, wobei der Hauptcontroller (12) derart konfiguriert ist, Zeitschlitze zum Empfang von Signalen durch das sekundäre Modem (10) von jeder der weiteren Messtastervorrichtungen (4b-4e) zu planen.

11. Funkschnittstelle (2) nach Anspruch 10, wobei der Hauptcontroller (12) derart konfiguriert ist, um zu verhindern, dass das sekundäre Modem (10) auf einem Frequenzkanal während Zeiten überträgt, wenn das primäre Modem (6) überträgt, oder erwartet, auf einem solchen Kanal zu empfangen.

12. Funkschnittstelle (2) nach einem der Ansprüche 10 bis 11, wobei der Hauptcontroller (12) derart konfiguriert ist, zu definieren, welche Messtastervorrichtung (4a-4e) als die erste Messtastervorrichtung (4a) zur Kommunikation mit dem primären Modem (6) zugewiesen ist und welche Messtastervorrichtungen (4b-4e) als weitere Messtastervorrichtungen zur Kommunikation mit dem sekundären Modem (10) zugewiesen sind.

13. Funkschnittstelle nach einem der Ansprüche 10 bis 12, wobei der Hauptcontroller (12) derart konfiguriert ist, dass ermöglicht wird, dass die erste Messtastervorrichtung (4a), die zur Kommunikation mit dem primären Modem (6) zugewiesen worden ist, mit einer der Mehrzahl weiterer Messtastervorrichtungen (4b-4e) in Kommunikation mit dem sekundären Modem (10) geschaltet wird, wodurch eine Frequenzsprungsynchronisierungsinformation, die von dem sekundären Modem (10) verwendet wird, von dem primären Modem (6) verwendet wird, um die Bildung von Kommunikationen mit der neuen ersten Messtastervorrichtung zu ermöglichen.

14. Messvorrichtung, mit einer Funkschnittstelle (2) nach einem der vorhergehenden Ansprüche und einer oder mehreren Messtastervorrichtungen (4a-4e).

15. Messbausatz, umfassend eine Funkschnittstelle (2) nach einem der Ansprüche 1 bis 13 und zumindest eines einer Messtastervorrichtung (4a-4e), eines Werkzeugschaftes für eine Messtastervorrichtung, Software zur Kopplung der Funkschnittstelle mit einem Werkzeugmaschinencontroller, einer Batterie und einer Leistungsversorgung.

## Revendications

1. Interface radio (2) servant à communiquer avec une pluralité de dispositifs de palpage de mesure (4a-4e), l'interface radio (2) comprenant un modem primaire (6) servant à communiquer avec un premier dispositif de palpage de mesure (4a) sur une première liaison radio à spectre étalé à sauts de fréquences, le modem primaire (6) étant configuré pour permettre un maintien de la synchronisation des sauts de fréquences avec le premier dispositif de palpage de mesure (4a) et pour recevoir des données de mesure en temps réel du premier dispositif de palpage de mesure (4a) sur la première liaison radio à spectre étalé à sauts de fréquences,
**caractérisée en ce que** l'interface (2) comprend aussi un modem secondaire (10) configuré pour communiquer avec une pluralité d'autres dispositifs de palpage de mesure (4b-4e), quand les dits autres dispositifs de palpage de mesure sont à un état d'attente, au moyen d'une pluralité d'autres liaisons radio à spectre étalé à sauts de fréquences, le modem secondaire (10) étant configuré pour permettre un maintien de la synchronisation des sauts de fréquences avec chacun dispositif de ladite pluralité d'autres dispositifs de palpage de mesure (4b-4e) mais pas pour permettre la réception de données de mesure de l'un quelconque des autres dispositifs de palpage de mesure (4b-4e).

2. Interface radio (2) selon l'une quelconque des revendications précédentes, dans laquelle le modem primaire (6) sert à communiquer avec un premier dispositif de palpage de mesure (4a) lequel comprend un palpeur de mesure à déclenchement par contact, et les données de mesure comprennent un message de signal de déclenchement.

3. Interface radio (2) selon l'une quelconque des revendications précédentes, dans laquelle un signal d'horloge principal est récupéré du premier dispositif de palpage de mesure (4a) sur la première liaison radio à spectre étalé à sauts de fréquences.

4. Interface radio (2) selon l'une quelconque des revendications précédentes, dans laquelle l'interface est configurée pour maintenir une pluralité de domaines d'horloge qui sont synchronisés avec la pluralité d'autres dispositifs de palpage de mesure (4b-4e).

5. Interface radio (2) selon l'une quelconque des revendications précédentes, dans laquelle un signal d'horloge principal peut être récupéré de chaque dispositif de la pluralité d'autres dispositifs de palpage de mesure (4b-4e) sur la pluralité d'autres liaisons radio à spectre étalé à sauts de fréquences.

6. Interface radio (2) selon l'une quelconque des revendications précédentes, dans laquelle l'interface (2) comprend un moyen pour stocker le modèle de sauts du premier dispositif de palpage de mesure (4a) et de chaque dispositif de la pluralité d'autres dispositifs de palpage de mesure (4b-4e), le premier dispositif de palpage de mesure (4a) et chaque dispositif de la pluralité de dispositifs de palpage de mesure (4b-4e) mettant en œuvre des modèles de sauts de fréquences différents.

7. Interface radio (2) selon l'une quelconque des revendications précédentes, dans laquelle la pluralité d'autres liaisons radio à spectre étalé à sauts de fréquences entre le modem secondaire (10) et la pluralité d'autres dispositifs de palpage de mesure (4b-4e) sont synchrones.

8. Interface radio (2) selon l'une quelconque des revendications précédentes, dans laquelle chaque dispositif de la pluralité de dispositifs de palpage de mesure (4b-4e) est conçu pour transmettre périodiquement un signal de rythme, le deuxième modem (10) étant configuré pour accuser réception du dit signal de rythme à sa réception.

9. Interface radio (2) selon l'une quelconque des revendications précédentes, dans laquelle le modem secondaire (10) est configuré pour fonctionner à une cadence de sauts de fréquences inférieure à celle du modem primaire (6).

10. Interface radio (2) selon l'une quelconque des revendications précédentes, comprenant un contrôleur principal (12) servant à piloter les modems primaire et secondaire, dans laquelle le contrôleur principal (12) est configuré pour programmer des créneaux temporels pour la réception de signaux par le modem secondaire (10) venant de chaque dispositif parmi les autres dispositifs de palpage de mesure (4b-4e).

11. Interface radio (2) selon la revendication 10, dans laquelle le contrôleur principal (12) est configuré pour empêcher le modem secondaire (10) de transmettre sur un canal de fréquence pendant les périodes où le modem primaire (6) est en train de transmettre, ou d'attendre de recevoir, sur un canal de ce type.

12. Interface radio (2) selon l'une quelconque des revendications 10 à 11, dans laquelle le contrôleur principal (12) est configuré pour définir quel dispositif de palpage de mesure (4a-4e) est attribué comme premier dispositif de palpage de mesure (4a) pour communiquer avec le modem primaire (6) et quels dispositifs de palpage de mesure (4b-4e) sont attribués comme autres dispositifs de palpage de mesure pour communiquer avec le modem secondaire (10).

13. Interface radio selon l'une quelconque des revendications 10 à 12, dans laquelle le contrôleur principal (12) est configuré pour permettre au premier dispositif de palpage de mesure (4a), lequel a été attribué pour communiquer avec le modem primaire (6), d'être commuté avec un dispositif parmi la pluralité de dispositifs de palpage de mesure (4b-4e) en communication avec le modem secondaire (10), dans laquelle les informations de synchronisation de sauts de fréquences utilisées par le modem secondaire (10) sont utilisées par le modem primaire (6) pour permettre l'établissement de communications avec le nouveau premier dispositif de palpage de mesure.

14. Appareil de mesure comprenant une interface radio (2), selon l'une quelconque des revendications précédentes, et un ou plusieurs dispositifs de palpage de mesure (4a-4e).

15. Kit de mesure comprenant une interface radio (2), selon l'une quelconque des revendications 1 à 13 et au moins un dispositif de palpage de mesure (4a-4e), un support pour le dispositif de palpage de mesure, un logiciel pour assurer l'interface entre l'interface radio et un contrôleur de machine-outil, une pile et un bloc d'alimentation.
